# EUROPEAN PATENT APPLICATION

(11) **EP 4 675 246 A1**
(43) Date of publication of application: **07.01.2026**
(21) Application number: 24186927.0
(22) Date of filing: 05.07.2024
(51) Int. Cl.: G01L 25/00

(54) **SYSTEM AND METHOD FOR DYNAMIC CALIBRATION OF FORCE SENSOR MEDIUMS**

(71) Applicant: Prova Innovations Ltd., Hamilton, Ontario L8P 0A1 (CA)
(72) Inventor: THIESSEN, Neil, Hamilton, L8P 0A1 (CA); ROSATO, Matthew, Hamilton, L8P 0A1 (CA)
(74) Representative: Greaves Brewster LLP

(57) **Abstract**

A system and method for dynamic calibration of force sensor mediums is provided. The method includes: causing a force to be applied to and removed from a sensor; making force readings as the force is applied and removed; adjusting a gain setting; calculating the gain setting based on a resistance recorded at a peak force; calculating measured curves of the force readings; calculating a subsequent resistance upon a change in response to the force applied to the sensor; recording a duration that the force is applied; and calculating an absolute force based at least in part on the duration and the peak force. The method may also include: preprocessing data; training a machine learning model to align data points from the data to the baseline curve; and using the trained machine learning model to adjust the force readings in real time.

## Description

### TECHNICAL FIELD

Various embodiments are described herein that generally relate to a system for dynamic calibration of force sensor mediums, as well as the methods.

### BACKGROUND

The following paragraphs are provided by way of background to the present disclosure. They are not, however, an admission that anything discussed therein is prior art or part of the knowledge of persons skilled in the art.

Polyethylene is typically used in making force-sensitive resistors (FSR). As a force is applied then removed, the polyethylene will compress and decompress. As the polyethylene compresses, the carbon particles are forced to touch each other and create a resistance based on how many carbon particles are touching. One problem is that the polyethylene does not decompress to the original thickness resulting in different absolute values with subsequent compressions. Repeated compression and decompression invalidates any calibration that was originally completed.

Due to the random nature of the carbon particles that are embedded in the polyethylene, the resistance generated by a force will create a different value for every point on the sheet. This is a result of quantum tunneling. Each sensor therefore needs to be tested, calibrated, individually selected, and biased based on the value returned to obtain a product that meets the required specification window.

The above known issues of Polyethylene Linqstat (Velostat^{™}) add significantly to the cost of the sensor while at the same time reducing the accuracy of the sensor over a period of use.

There is a need for a system and method that addresses the challenges and/or shortcomings described above.

### SUMMARY OF THE INVENTION

Various embodiments of a system and method for dynamic calibration of force sensor mediums, and computer products for use therewith, are provided according to the teachings herein.

According to one aspect of the invention, there is disclosed a system for dynamic calibration of force sensor mediums comprising a computer processor and a non-transitory computer-readable medium having stored thereon program instructions that when executed cause the computer processor to perform the steps of: causing a force to be applied to a sensor and removed from the sensor; adjusting a gain setting for the sensor to a minimum gain setting; making force readings as the force is applied and removed, the force readings including a peak force; determining whether a gain adjustment is needed and, if so, adjusting the gain setting; calculating the gain setting based on a resistance recorded at the peak force; calculating measured curves of the force readings; calculating a subsequent resistance upon a change in response to the force applied to the sensor; recording a duration that the force is applied; and calculating an absolute force based at least in part on the duration and the peak force.

According to another aspect of the invention, there is disclosed a computer-implemented method for dynamic calibration of force sensor mediums comprising: causing a force to be applied to a sensor and removed from the sensor; adjusting a gain setting for the sensor to a minimum gain setting; making force readings as the force is applied and removed, the force readings including a peak force; determining whether a gain adjustment is needed and, if so, adjusting the gain setting; calculating the gain setting based on a resistance recorded at the peak force; calculating measured curves of the force readings; calculating a subsequent resistance upon a change in response to the force applied to the sensor; recording a duration that the force is applied; and calculating an absolute force based at least in part on the duration and the peak force.

According to another aspect of the invention, there is disclosed a computer program comprising instructions to cause a computer processor to execute the steps of the aforementioned computer-implemented method.

According to another aspect of the invention, there is disclosed a computer-readable medium having stored thereon the aforementioned computer program.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

### BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.
FIG. 1 shows a block diagram of an example embodiment of a system for dynamic calibration of force sensor mediums.
FIG. 2 shows an example method for dynamic calibration of force sensor mediums in accordance with one example embodiment.
FIG. 3 shows an example method for dynamic calibration of force sensor mediums in accordance with another example embodiment.
FIG. 4A shows an example graph of resistance dependence on time for a material.
FIG. 4B shows an example graph of dependencies between the load and the resistance of a used and fresh material.
FIG. 4C shows an example graph of the response time of used and fresh Velostat^{®}-based materials.
FIG. 5 shows example an embodiment of a single source excitation circuit.
FIG. 6A shows an example of a single supply configuration for terminating an unused operational amplifier.
FIG. 6B shows an example of a dual supply configuration for terminating an unused operational amplifier.
FIG. 7 shows an example of an operational amplifier configuration.

Further aspects and features of the example embodiments described herein will appear from the following description taken together with the accompanying drawings.

### DETAILED DESCRIPTION

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object oriented programming. The program code may be written in C⁺⁺, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

In accordance with the teachings herein, there are provided various embodiments for a system and method for dynamic calibration of force sensor mediums, and computer products for use therewith.

There are a number of ways to measure force or pressure, including force-sensitive resistors (FSR), piezoelectric sensors, and Linqstat (Velostat^{™}) pressure sensing. FSRs typically consist of a conductive polymer, which change resistance in a predictable manner following application of force to their surface. Piezoelectric pressure sensors are devices that use the piezoelectric effect to measure changes in force or pressure by converting them into an electrical charge. Linqstat pressure sensing uses the properties of Linqstat to detect force on its surface due to conductivity changes when the pressure on the material changes. (Linqstat is a carbon-filled, electrically conductive polyethylene plastic film designed to provide both physical and static protection.)

In at least one of the embodiments described herein, the system for dynamic calibration of force sensor mediums employs Linqstat as a force-sensitive resistor (FSR) to measure absolute force values using a combination of hardware and machine learning (or other suitable fine tuning) algorithms, eliminating the need for traditional sensor calibration and selection. The system features a programmable gain amplifier that dynamically adjusts the signal amplitude to maintain optimal range within the analog-to-digital converter (ADC). By sampling force data at high frequencies during application and release, the machine learning (or other suitable fine tuning) algorithm overlays these data points onto a baseline resistance vs. force curve. This method compensates for variations in resistance due to material fatigue and positional differences within the Linqstat sheet. The result is a highly accurate and long-lasting force measurement system that maintains its precision over time and repetitive use without the need for exhaustive pre-use calibration or proprietary manufacturing processes.

The resistance vs. force produces a curve with the same shape but at a different absolute value based on use and specific location in the Linqstat sheet. By sampling at a high rate, the system can use machine learning (or other suitable fine tuning) to adjust the absolute value of the sampled reading and superimpose it on the basic shape. With the known reading of zero to the total force being applied. the peak value of the force applied can be extrapolated based on the slope of the curve.

The variation of resistance in a Linqstat sensor is well known. As a result, alternative solutions may focus on the mixing process of the carbon particles with the polyethylene. Another solution to obtain increased accuracy is to compress the material many times as the variation in absolute reading decreases with use. This process can involve the ratio, the process used to mix the compound, and the shape and size of the carbon particles. Another solution used is to additionally test each sensor and only select those that meet the specification required being sought.

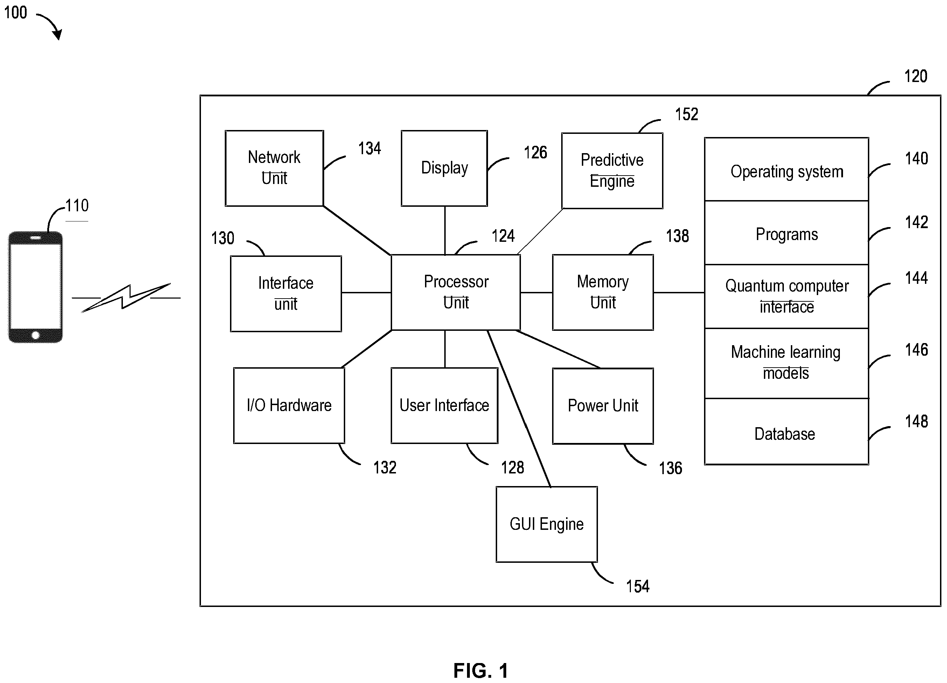

Reference is first made to FIG. 1, showing block diagram of an example embodiment of a system 100 for dynamic calibration of force sensor mediums. The system 100 includes at least one user device 110 and at least one server 120. The user device 110 and the server 120 may communicate, for example, wirelessly or over the Internet.

The user device 110 may be a computing device that is operated by a user. The user device 110 may be, for example, a smartphone, a smartwatch, a tablet computer, a laptop, a virtual reality (VR) device, or an augmented reality (AR) device. The user device 110 may also be, for example, a combination of computing devices that operate together, such as a smartphone and a sensor. The user device 110 may also be, for example, a device that is otherwise operated by a user, such as a drone, a robot, or remote-controlled device; in such a case, the user device 110 may be operated, for example, by a user through a personal computing device (such as a smartphone). The user device 110 may be configured to run an application (e.g., a mobile app) that communicates with other parts of the system 100, such as the server 120.

The server 120 may run on a single computer, including a processor unit 124, a display 126, a user interface 128, an interface unit 130, input/output (I/O) hardware 132, a network unit 134, a power unit 136, and a memory unit (also referred to as "data store") 138. In other embodiments, the server 120 may have more or less components but generally function in a similar manner. For example, the server 120 may be implemented using more than one computing device.

The processor unit 124 may include a standard processor, such as the Intel Xeon processor, for example. Alternatively, there may be a plurality of processors that are used by the processor unit 124, and these processors may function in parallel and perform certain functions. The display 126 may be, but not limited to, a computer monitor or an LCD display such as that for a tablet device. The user interface 128 may be an Application Programming Interface (API) or a web-based application that is accessible via the network unit 134. The network unit 134 may be a standard network adapter such as an Ethernet or 802.11x adapter.

The processor unit 124 may execute a predictive engine 152 that functions to provide predictions by using machine learning models 146 stored in the memory unit 138. The predictive engine 152 may build a predictive algorithm through machine learning. The training data may include, for example, image data, video data, audio data, and text.

The processor unit 124 can also execute a graphical user interface (GUI) engine 154 that is used to generate various GUIs. The GUI engine 154 provides data according to a certain layout for each user interface and also receives data input or control inputs from a user. The GUI then uses the inputs from the user to change the data that is shown on the current user interface, or changes the operation of the server 120 which may include showing a different user interface.

The interface unit 130 may include USB ports, serial ports, and/or other connection types to enable data transfer. The input/output (I/O) hardware 132 may include keyboards, pointing devices (e.g., mouse), touchscreens, printers, and/or speakers. The power unit 136 may include a power supply unit (PSU) with adequate wattage to support all server components, as well as backup power, such as uninterruptible power supplies (UPS).

The memory unit 138 may store the program instructions for an operating system 140, program code 142 for other applications, an input module 144, a plurality of machine learning models 146, an output module 148, and a database 150. The machine learning models 146 may include, but are not limited to, image recognition and categorization algorithms based on deep learning models and other approaches. The database 150 may be, for example, a local database, an external database, a database on the cloud, multiple databases, or a combination thereof.

In at least one embodiment, the machine learning models 146 include a combination of convolutional and recurrent neural networks. Convolutional neural networks (CNNs) are designed to recognize images, patterns. CNNs perform convolution operations, which, for example, can be used to classify regions of an image, and see the edges of an object recognized in the image regions. Recurrent neural networks (RNNs) can be used to recognize sequences, such as text, speech, and temporal evolution, and therefore RNNs can be applied to a sequence of data to predict what will occur next. Accordingly, a CNN may be used to read what is happening on a given image at a given time, while an RNN can be used to provide an informational message.

The programs 142 comprise program code that, when executed, configures the processor unit 124 to operate in a particular manner to implement various functions and tools for the system 100.

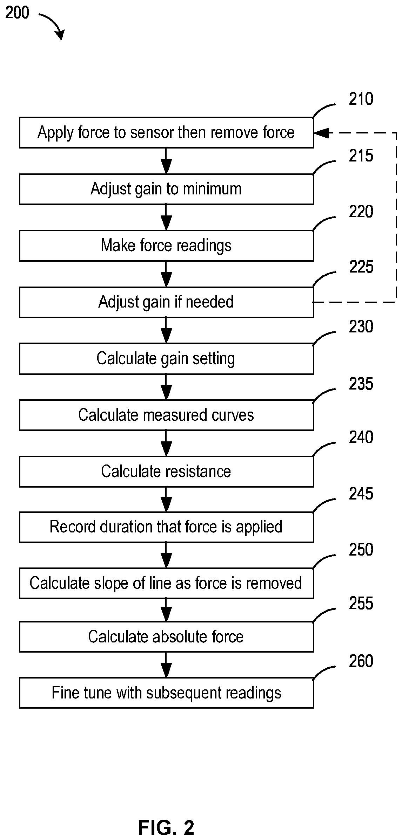

Reference is now made to FIG. 2, showing a method 200 for dynamic calibration of force sensor mediums. The method 200 may be implemented using all or part of the system 100. The method 200 may be integrated into hardware, such as custom integrated circuit (IC), ASIC, or FPGA. Alternatively, or in addition, the method 200 may be integrated into software (or equivalent computer product).

At 210, a force is applied to a sensor then removed.

For example, the system 100 may begin by applying a known force to the sensor using a calibrated force application device. The system 100 maintains the force for a predetermined duration to ensure stable readings. Then, the system 100 gradually removes the force to allow the sensor to return to its baseline state. This initial application and removal of force helps establish a baseline response for the sensor.

At 215, gain is adjusted to minimum.

For example, the system 100 may set a programmable gain amplifier (PGA) to its minimum gain setting. This adjustment ensures that the initial signal amplitude is within a measurable range for an analog-to-digital converter (ADC). The system 100 documents the initial gain value for reference.

At 220, force readings are made as the force is applied then removed. This may include identifying a peak force reading.

For example, the system 100 may apply the force to the sensor again and starts taking high-frequency readings of the sensor's resistance. The system 100 continues to record these readings as the force is gradually removed. The system 100 ensures that the sampling rate is high enough to capture transient changes in resistance accurately.

At 225, gain is adjusted if needed. Steps 210 to 220 may be repeated steps 1 to 3 until a reading is in mid-scale. This may include determining whether a gain adjustment is needed.

For example, if the recorded readings do not fall within the optimal range of the ADC (typically mid-scale), the system 100 may adjust the gain of the PGA incrementally. The system 100 repeats the process of applying and removing force, and taking high-frequency readings each time, until the readings consistently fall within the mid-scale range of the ADC. This ensures maximum resolution and accuracy of the force measurements.

At 230, the gain setting is calculated with respect to resistance returned by peak force reading. This may be followed by recording the gain setting for the next reading.

For example, the system 100 may calculate the gain setting based on the resistance value recorded at the peak force. This calculation involves comparing the peak resistance value to the ADC's full-scale range. The system records the gain setting used for this peak reading, which may serve as a reference for future measurements under similar conditions.

At 235, the measured curves of the force readings are calculated using all samples taken as the force is applied and removed.

For example, the system 100 may utilize all the recorded resistance readings during the application and removal of force to generate a detailed resistance vs. force curve.

At 240, based on where the readings start to register, the resistance is calculated, and the slope of the line is determined by subsequent readings until the peak is reached.

For example, the system 100 may identify the point at which the resistance readings begin to register a change in response to the applied force. The system 100 calculates the initial resistance value at this point. As the force increases, the system 100 determines the slope of the resistance vs. force curve by analyzing the subsequent readings up to the peak force. This slope is indicative of the sensor's sensitivity.

At 245, the duration that the force is applied is recorded and the slope is calculated.

For example, the system 100 may record the duration for which the force is applied to the sensor. The system 100 calculates the slope of the resistance vs. force curve during this application period.

At 250, the slope of the line is again calculated as the force is removed, allowing the difference to be extrapolated.

For example, the system 100 may use this difference in slope to calculate how many times the sensor has been used (or the elasticity of the polyethylene). The system 100 applies the slope of the steady state force to further assist in calculating the elasticity of the sensor. As the force is gradually removed, the system 100 calculates the slope of the resistance vs. force curve again. The system 100 compares this slope with the slope calculated during force application. The difference between these slopes determines the number of times the sensor has been used and its current state of elasticity.

At 255, the absolute force is calculated using the previously recorded data and the peak force read.

For example, the system 100 may use the recorded data, including the initial and peak resistance values, the slopes during application and removal, and the duration of force application, to calculate the absolute force applied to the sensor.

At 260, each subsequent reading provides further fine tuning, providing continuous accuracy as the sensor compresses with use.

For example, the system 100 may use machine learning that is continuously updated with new sets of readings. This iterative process allows the algorithm to refine its predictions and adjustments, ensuring that the sensor maintains high accuracy and reliability over repeated uses and varying conditions. The continuous calibration compensates for material fatigue and other changes in the sensor's properties over time. Alternatively, or in addition, the system 100 may use an approximation (e.g., rules-based, stochastic, or probabilistic) rather than machine learning.

It should be understood that one or more of the above steps of the method 200 may be omitted or reordered so long as the purpose of dynamically calibrating force sensor mediums is accomplished.

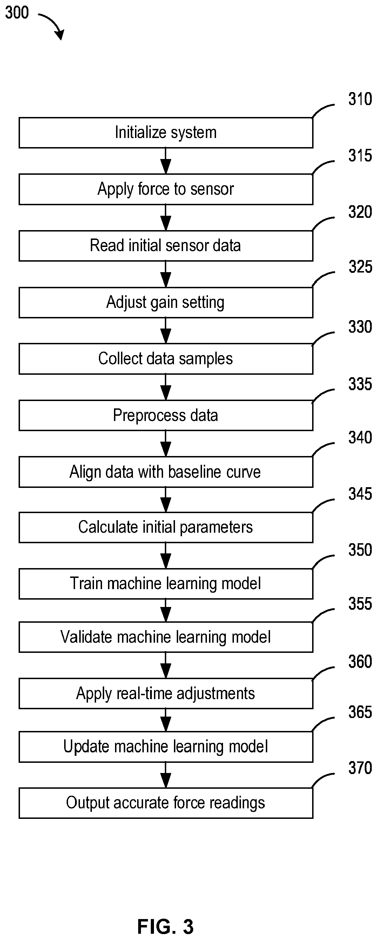

Reference is now made to FIG. 3, showing a method 300 for dynamic calibration of force sensor mediums. The method 300 may be implemented using all or part of the system 100. The method 300 may be integrated into hardware, such as custom integrated circuit (IC), ASIC, or FPGA. Alternatively, or in addition, the method 300 may be integrated into software (or equivalent computer product).

At 310, the system is initialized.

For example, the system 100 may set the initial gain for a programmable gain amplifier (PGA). The system 100 initializes the ADC and microprocessor.

At 315, a force is applied to a sensor.

For example, the system 100 may apply a force to a Linqstat sensor.

At 320, initial sensor data is read.

For example, the system 100 may obtain sample force readings at high frequency as force is applied and removed.

At 325, the gain setting is adjusted.

For example, the system 100 may evaluate if the current gain setting is optimal. If not, the system 100 adjusts the programmable gain amplifier to bring the signal within the midrange of the ADC. The system 100 repeats this until optimal gain is achieved.

At 330, high-frequency data samples are collected.

For example, the system 100 may continue sampling force readings at high frequency. The system 100 stores the sampled data points.

At 335, data is preprocessed, the data including, for example, the initial gain for the PGA, the force readings, or the adjusted gain setting.

For example, the system 100 may filter and normalize the collected data. The system 100 removes noise and outliers from the dataset.

At 340, data is aligned with the baseline curve.

For example, the system 100 may use an initial machine learning model to overlay sampled data onto the baseline resistance vs. force curve. The system 100 identifies the starting point and peak value of the force readings.

At 345, initial parameters are calculated.

For example, the system 100 may determine the initial resistance and slope of the resistance vs. force curve. The system 100 records the gain setting and initial parameters.

At 350, the machine learning model is trained. The machine learning model may be trained using the initial machine learning model (that provided the sampled data overlayed on the baseline curve).

For example, the system 100 may input the preprocessed data into the machine learning model. The system 100 updates the model with new data points to refine its predictions. The system 100 uses supervised learning techniques to align data points accurately to the baseline curve.

At 355, the accuracy of the machine learning model is validated.

For example, the system 100 may compare model predictions with actual force readings. The system 100 calculates error metrics to assess accuracy. If accuracy is below a threshold, the system 100 refines the model further with additional data.

At 360, real-time adjustments are applied.

For example, the system 100 may use the trained model to adjust real-time force readings. The system 100 continuously overlays new data onto the baseline curve and makes necessary adjustments.

At 365, the machine learning model is monitored and updated.

For example, the system 100 may continuously monitor sensor performance and collect new data. The system 100 periodically retrains the machine learning model with the latest data to account for material fatigue and usage variations.

At 370, accurate force readings are output.

For example, the system 100 may calculate and output the accurate force value based on the adjusted data.

There may be further steps added to or inserted into method 300 to customize or enhance the method 300 according to user needs. The further steps include the following:
1. Log Data for Continuous Improvement: Store processed data and model adjustments for future analysis and improvements.
2. User Feedback Integration: Collect user feedback on sensor performance. Use feedback to make further adjustments to the machine learning model.
3. Error Handling and Alerts: Implement error detection mechanisms. Generate alerts if the sensor readings deviate significantly from expected values.
4. System Maintenance and Updates: Schedule regular maintenance checks. Update the machine learning model and system firmware as needed.

It should be understood that one or more of the above steps of the method 300 may be omitted or reordered so long as the purpose of dynamically calibrating force sensor mediums is accomplished.

In addition, one or more steps of method 200 may be inserted into method 300 so long as the purpose of dynamically calibrating force sensor mediums is accomplished. Likewise, one or more steps of method 300 may be inserted into method 200 so long as the purpose of dynamically calibrating force sensor mediums is accomplished.

### Example Embodiment A

Example embodiment A is a computer-implemented method for dynamic calibration of force sensor mediums that comprises: causing a force to be applied to a sensor and removed from the sensor; adjusting a gain setting for the sensor to a minimum gain setting; making force readings as the force is applied and removed, the force readings including a peak force; determining whether a gain adjustment is needed and, if so, adjusting the gain setting; calculating the gain setting based on a resistance recorded at the peak force; calculating measured curves of the force readings; calculating a subsequent resistance upon a change in response to the force applied to the sensor; recording a duration that the force is applied; and calculating an absolute force based at least in part on the duration and the peak force

In at least one implementation of example embodiment A, the adjusting the gain setting for the sensor comprises setting a programmable gain amplifier (PGA) to the minimum gain setting for the PGA.

In at least one implementation of example embodiment A, the making force readings comprises taking high-frequency readings of a resistance of the sensor.

In at least one implementation of example embodiment A, the determining whether the gain adjustment is needed is based on a repetition of (i) causing the force to be applied to the sensor and removed from the sensor; (ii) adjusting the gain setting for the sensor to the minimum gain setting; and (iii) making force readings as the force is applied and removed.

In at least one implementation of example embodiment A, the determining whether the gain adjustment is needed depends on whether the force readings fall within an optimal range of an analog-to-digital converter (ADC) in communication with the sensor.

In at least one implementation of example embodiment A, the method further comprises: preprocessing data including the force readings; training a machine learning model to align data points from the data to the baseline curve; and using the trained machine learning model to adjust the force readings in real time.

In at least one implementation of example embodiment A, the method further comprises: aligning the data with the baseline curve by overlaying the data onto the baseline curve using an initial version of the machine learning model before further training the machine learning model.

In at least one implementation of example embodiment A, the method further comprises: validating the machine learning model, the validating being based at least in part on comparing model predictions with the force readings.

In at least one implementation of example embodiment A, the method further comprises: updating the machine learning model, the updating being based at least in part on new data related to performance of the sensor.

In at least one implementation of example embodiment A, the method further comprises: outputting accurate force readings based on the data adjusted by the machine learning model.

Example embodiment A may by realized by a system for dynamic calibration of force sensor mediums comprising a computer processor and a non-transitory computer-readable medium having stored thereon program instructions that when executed cause the computer processor to perform the steps of the method for dynamic calibration of force sensor mediums described above and optionally one or more of the implementations of example embodiment A described above.

### Technical Advantages

In at least one of the embodiments described herein, hardware adjustments are combined with machine learning (or other suitable fine tuning) to solve issues in force-sensitive resistor (FSR) technology, particularly with materials like Linqstat. The following is a list of technical advantages achieved by one or more of the embodiments of the system (or methods) described herein.
1. Dynamic Gain Adjustment: The system dynamically adjusts gain to ensure that the force readings fall within the optimal range of the ADC. This real-time adjustment ensures higher precision and accuracy in the force measurements without requiring manual calibration.
2. Adaptive Machine Learning Algorithm: The use of a machine learning algorithm to align the sampled data with a baseline resistance vs. force curve is advantageous. The algorithm adapts to the sensor's usage over time, continuously improving the accuracy of force measurements by learning from each new data point. Alternatively, or in addition, the system may use an approximation (e.g., rules-based, stochastic, or probabilistic) algorithm rather than a machine learning algorithm to achieve the same or similar results.
3. Real-Time Sampling and Calibration: The system samples force readings at high frequencies and uses these samples to calibrate both the gain setting in hardware and the force measurements. This real-time approach to calibration and adjustment reduces the need for pre-use calibration and allows for consistent accuracy throughout the sensor's lifespan.
4. Compensation for Material Fatigue: By calculating the difference in the slope of the resistance vs. force curve as force is applied and removed, the invention can account for the elasticity changes in the polyethylene material. This compensation mechanism allows the sensor to maintain accuracy despite the material's natural wear and tear.
5. Simplification of Manufacturing Process: The system reduces the complexity of the manufacturing process by eliminating the need for extensive testing and calibration of each sensor. This may be achieved through the use of machine learning (or other suitable fine tuning) and real-time adjustment mechanisms, which handle variability in sensor performance.
6. Use of Standardized Curves for Force Measurement: Instead of relying on precise chemical compositions or manufacturing processes to achieve consistent sensor performance, the system standardizes the force measurement process by overlaying real-time data onto a baseline resistance vs. force curve. This approach ensures that even sensors with inherent variability can provide accurate force measurements.
7. Enhanced Long-Term Reliability: By continuously refining the algorithm with each new reading, the system ensures that the sensor remains accurate over extended periods of use. This continuous improvement contrasts with conventional methods that may degrade in accuracy over time.
8. Cost-Effective Solution: The reduction in the need for individual sensor calibration and selection significantly lowers manufacturing costs. This cost-effective approach makes the technology more accessible and scalable for various applications.
9. Versatility Across Different Applications: The ability to maintain accuracy regardless of sensor location on the sheet or usage history makes the system versatile and applicable in a wide range of scenarios where precise force measurement is critical.

### Comparison to Conventional Solutions

The following is a discussion of the differences between the embodiments of the system (or methods) described herein and conventional solutions.
1. Use of Machine Learning for Calibration: Conventional force-sensitive resistor (FSR) solutions often rely on chemical processes and rigorous pre-use calibration to achieve accurate force measurements. These methods involve proprietary mixing techniques, individual sensor calibration, and selection, which are time-consuming and expensive. In contrast, at least one of the embodiments described herein uses a machine learning algorithm to dynamically calibrate and adjust force readings in real-time. This approach eliminates the need for pre-use calibration and proprietary processes, making it more efficient and cost-effective. Alternatively, or in addition, the system may use an approximation (e.g., rules-based, stochastic, or probabilistic) approach rather than machine learning to achieve the same or similar results.
2. Dynamic Gain Adjustment: While conventional solutions may involve fixed gain settings or manual adjustments, at least one of the embodiments described herein employs a programmable gain amplifier that automatically adjusts the signal amplitude to maintain the optimal range within the analog-to-digital converter (ADC). This dynamic adjustment ensures consistent and accurate force readings regardless of the sensor's initial condition or variations over time.
3. Compensation for Material Fatigue: Conventional solutions often struggle with material fatigue and compression set in polyethylene-based sensors, leading to degradation in accuracy over time. At least one of the embodiments described herein addresses this by using high-frequency sampling and machine learning (or other suitable fine tuning) to align real-time data with a baseline resistance vs. force curve. This compensates for changes in material properties, ensuring long-term accuracy and reliability.
4. Simplification of Manufacturing: Conventional FSR solutions require complex and proprietary manufacturing processes to achieve consistent performance. By relying on real-time data processing and machine learning (or other suitable fine tuning), at least one of the embodiments described herein can simplify the manufacturing process. There is no need for extensive testing, calibration, or selection of individual sensors, significantly reducing production costs and time.

### Technical Features

The following is a summary of some of the technical features of the embodiments of the system (or methods) described herein.
1. Integration of Machine Learning: The system provides integration of machine learning algorithms for real-time calibration and adjustment of force readings. This allows the system to maintain high accuracy without the need for pre-use calibration or proprietary processes. Alternatively, or in addition, the system may use an approximation (e.g., rules-based, stochastic, or probabilistic) algorithm rather than machine learning algorithms.
2. Programmable Gain Amplifier: The system uses a programmable gain amplifier to dynamically adjust signal amplitude. This ensures that the force readings are always within the optimal range of the ADC, improving the precision and reliability of the measurements.
3. High-Frequency Sampling: Sampling force data at high frequencies during application and release allows the system to capture detailed information about the sensor's response. This data is useful for the machine learning (or other suitable fine tuning) algorithm to accurately overlay the sampled points onto the baseline resistance vs. force curve.
4. Compensation for Material Variability: The system has the ability to compensate for variations in resistance due to material fatigue and positional differences within the Linqstat sheet. This ensures consistent performance over time, even with repeated use.
5. Elimination of Proprietary Processes: By removing the need for proprietary chemical mixing processes and extensive calibration, the system simplifies manufacturing and reduces costs. This makes the technology more accessible and scalable for various applications.
6. Enhanced Longevity and Reliability: The continuous adaptation and improvement of the machine learning model (or other suitable fine tuning approach) with each new reading allows the sensor to maintain its accuracy and reliability over extended periods of use. This longevity is an advantage over conventional FSR solutions that degrade over time.

### Technical Benefits

The following is a discussion of the technical benefits of the embodiments of the system (or methods) described herein.
1. No Need for Exhaustive Testing During Manufacturing: The system eliminates the necessity for extensive and time-consuming testing during the manufacturing process. Conventional force-sensitive resistors (FSRs) require each sensor to be individually tested and calibrated to ensure they meet the desired specifications. The system uses machine learning (or other suitable fine tuning) algorithms to calibrate and adjust the force readings in real time, which means that sensors do not need to be pre-tested. This reduces the time and labor involved in the manufacturing process.
2. Elimination of the Secret Mixing Process: The reliance on proprietary processes for mixing carbon particles with polyethylene to achieve consistent sensor performance is eliminated. The system does not depend on the precise chemical composition or manufacturing techniques to ensure accuracy. Instead, it leverages real-time data processing and/or machine learning (or other suitable fine tuning) to achieve high accuracy, making the production process simpler and more transparent.
3. Reduced Manufacturing and Selection Costs: The system lowers the cost of manufacturing and sensor selection. By removing the need for individual calibration and the complexities of the proprietary mixing process, the production costs are reduced. This cost efficiency can make the sensors more affordable and accessible for a broader range of applications.
4. Maintenance of Accuracy with Repeated Use: The system maintains accuracy over time, despite the repetitive use of the sensor. Conventional FSRs often suffer from accuracy degradation due to material fatigue and compression set in the polyethylene. The system compensates for these issues by continuously adjusting the force readings, for example, using a machine learning algorithm (or other suitable fine tuning), ensuring consistent performance even after extensive use.
5. Scalability and Flexibility: The system's reliance on software-based adjustments rather than fixed hardware configurations provides for greater scalability and flexibility. New sensors can be easily integrated into the system without extensive reconfiguration, making it suitable for large-scale production and deployment.
6. Enhanced Sensor Lifespan: By compensating for material fatigue and wear through real-time adjustments, the system extends the effective lifespan of the sensors. This reduces the need for frequent replacements and maintenance, providing long-term cost savings and reliability for end-users.
7. Versatility in Application: The ability to accurately measure force without the need for pre-calibration makes the system versatile across different applications. It can be used in various industries such as healthcare, robotics, automotive, and consumer electronics, where precise force measurement is crucial.
8. Increased Accuracy and Reliability: The combination of high-frequency sampling, programmable gain amplification, and/or machine learning (or other suitable fine tuning) ensures that the force readings are not only accurate but also reliable under different conditions and over extended periods. This level of accuracy and reliability surpasses that of conventional FSRs, providing a significant advantage in performance-critical applications.
9. Simplified Supply Chain: The reduction in manufacturing complexity and elimination of proprietary mixing processes simplify the supply chain. Manufacturers can source standard materials without needing specialized compounds, streamlining production and reducing potential supply chain disruptions.

### Overcoming Shortcomings in Conventional Systems

The following is a discussion of how the embodiments of the system (or methods) described herein overcome shortcomings in conventional systems.
1. Addressing Material Fatigue and Compression Set: Conventional FSRs suffer from material fatigue and compression set, which degrade their accuracy over time. The system overcomes these issues by using machine learning (or other suitable fine tuning) algorithms to adjust for changes in material properties, ensuring consistent performance.
2. Mitigating Variability Due to Quantum Tunneling: The random distribution of carbon particles in polyethylene sheets leads to variable resistance values. The system mitigates this issue by aligning real-time data with a baseline resistance vs. force curve using machine learning (or other suitable fine tuning), thus standardizing the readings and improving accuracy.
3. Eliminating the Need for Proprietary Processes: By moving away from proprietary mixing and calibration processes, the system reduces dependency on specialized knowledge and techniques. This not only simplifies manufacturing but also makes the technology more accessible and easier to reproduce.

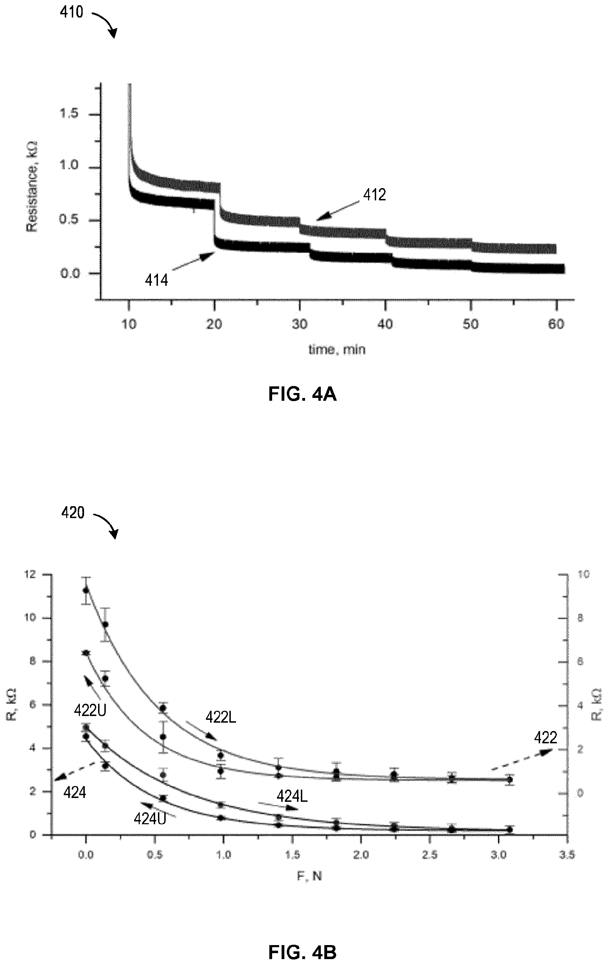

FIGS. 4A-4C show example graphs of sensor sensitivity.

FIG. 4A shows an example of a graph 410 of resistance depending on time, when a material was pressed with a force of 0.14 to 3.08 N with an increment of 0.42 N, the force being increased every 8 mins. The upper line is for fresh material 412, and the lower line is for used material 414.

FIG. 4B shows an example of a graph 420 of dependencies between the load and the resistance of a used and fresh material. The two upper lines are for fresh material 422, and the two lower lines are for used material 424. The graph 420 shows loading 422L and unloading 422U for the fresh material 422. The graph 420 shows loading 424L and unloading 424U for the used material 424.

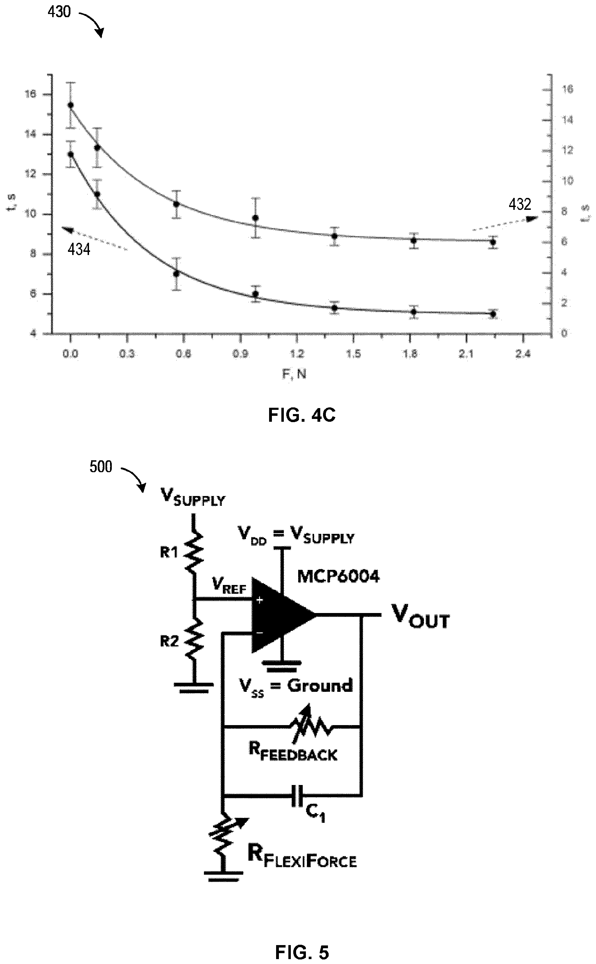

FIG. 4C shows an example of a graph 430 of the response time of used and fresh Velostat^{®}-based material. The upper line is for fresh Velostat^{®}-based material 432, and the lower line is for used Velostat^{®}-based material 434.

FIGS. 4A-4C do not provide a solution for the Linqstat variability but documents the behavior with use. In particular, FIG. 4B shows resistance at 0 N moving closer together during the loading and unloading as the material is being used due to compression, thus identifying the fatigue. This spread can be used to help determine where on the aging curve the sensor is.

As the material fatigues, the absolute resistance also decreases. This further increases the certainty of where on the aging curve the material is. When the load is in a steady state, the resistance of the newer material will continue to drift down. This is less so as the material fatigues. Using the above information, as the force is applied and removed, a machine learning (or other suitable fine tuning) routine can evaluate the collected curve to determine the force being applied.

FIG. 5 shows an example embodiment of a single source excitation circuit 500 for use with the system 100. The single source circuit 500 provides acceptable voltage vs. force linearity while also being easy to implement in a portable device. The single source circuit 500 is suitable for implementations in a device once proper circuit parameters and sensor sensitivity have been defined. V_{REF} options include a square wave (up to 5V, 50% Max Duty Cycle) and DC input (025V - 1.25V). R_{FEEDBACK}=100kΩ potentiometer and C1 = 47pF are typical settings. The circuit 500 may be modified by replacing R2 with a digital potentiometer.

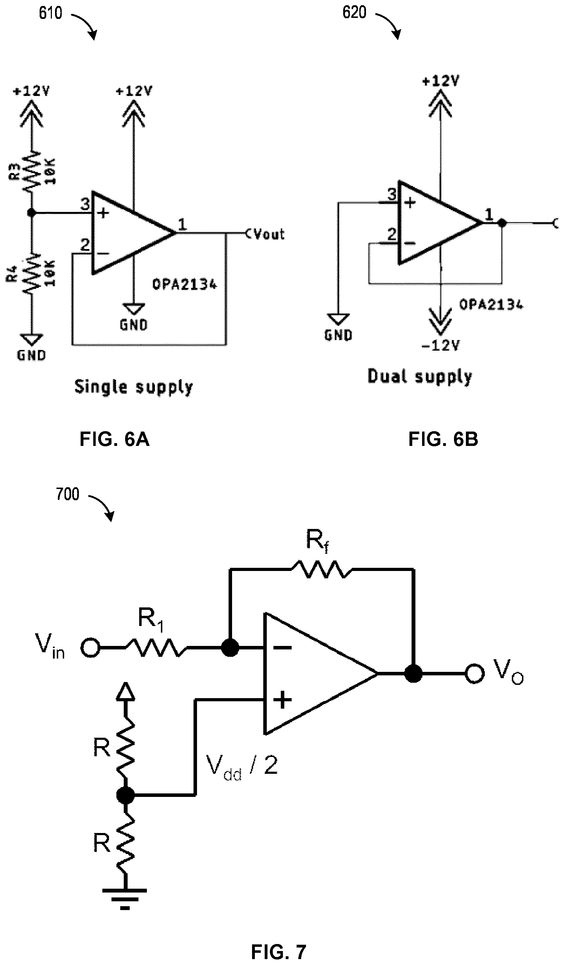

FIG. 6A shows an example of a single supply configuration 610 for terminating an unused operational amplifier (op-amp) for use with the system 100. FIG. 6B shows an example of a dual supply configuration 620 for terminating an unused op-amp for use with the system 100. The configurations 610 and 620 show how to configure an op-amp in a way that enables a circuit with analog components to operate in a stable manner. The configurations 610 and 620 show circuits with the OPA2134 instrumental amplifier IC, but they can work equally well with comparable amplifiers.

In FIGS. 6A and 6B, the configurations 610 and 620 show a non-inverting terminal connected to a voltage divider, with the op-amp itself configured as a voltage follower. In the configurations 610 and 620, the output voltage is between the supply voltage, so this ensures that the input supply falls under the common-mode voltage range. With the configurations 610 and 620, the op-amp is stable with a low gain, the output voltage is not saturated, and power consumption is stable.

FIG. 7 shows an example of an operational amplifier configuration 700 for use with the system 100. The operational amplifier (op-amp) configuration 700 uses an inverting amplifier configuration.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

## Claims

1. A system for dynamic calibration of force sensor mediums comprising a computer processor and a non-transitory computer-readable medium having stored thereon program instructions that when executed cause the computer processor to perform the steps of:
causing a force to be applied to a sensor and removed from the sensor;
adjusting a gain setting for the sensor to a minimum gain setting;
making force readings as the force is applied and removed, the force readings including a peak force;
determining whether a gain adjustment is needed and, if so, adjusting the gain setting;
calculating the gain setting based on a resistance recorded at the peak force;
calculating measured curves of the force readings;
calculating a subsequent resistance upon a change in response to the force applied to the sensor;
recording a duration that the force is applied; and
calculating an absolute force based at least in part on the duration and the peak force.

2. The system of claim 1, wherein the adjusting the gain setting for the sensor comprises setting a programmable gain amplifier (PGA) to the minimum gain setting for the PGA.

3. The system of claim 1 or claim 2, wherein the making force readings comprises taking high-frequency readings of a resistance of the sensor.

4. The system of any one of claims 1 to 3, wherein the determining whether the gain adjustment is needed is based on a repetition of (i) causing the force to be applied to the sensor and removed from the sensor; (ii) adjusting the gain setting for the sensor to the minimum gain setting; and (iii) making force readings as the force is applied and removed.

5. The system of any one of claims 1 to 4, wherein the determining whether the gain adjustment is needed depends on whether the force readings fall within an optimal range of an analog-to-digital converter (ADC) in communication with the sensor.

6. The system of any one of claims 1 to 5, wherein the program instructions further cause the computer processor to perform the steps of:
preprocessing data including the force readings;
training a machine learning model to align data points from the data to the baseline curve; and
using the trained machine learning model to adjust the force readings in real time.

7. The system of claim 6, wherein the program instructions further cause the computer processor to perform the step of: aligning the data with the baseline curve by overlaying the data onto the baseline curve using an initial version of the machine learning model before further training the machine learning model.

8. The system of claim 6 or claim 7, wherein the program instructions further cause the computer processor to perform the step of: validating the machine learning model, the validating being based at least in part on comparing model predictions with the force readings.

9. The system of any one of claims 6 to 8, wherein the program instructions further cause the computer processor to perform the step of: updating the machine learning model, the updating being based at least in part on new data related to performance of the sensor.

10. The system of any one of claims 6 to 9, wherein the program instructions further cause the computer processor to perform the step of: outputting accurate force readings based on the data adjusted by the machine learning model.

11. A computer-implemented method for dynamic calibration of force sensor mediums comprising:
causing a force to be applied to a sensor and removed from the sensor;
adjusting a gain setting for the sensor to a minimum gain setting;
making force readings as the force is applied and removed, the force readings including a peak force;
determining whether a gain adjustment is needed and, if so, adjusting the gain setting;
calculating the gain setting based on a resistance recorded at the peak force;
calculating measured curves of the force readings;
calculating a subsequent resistance upon a change in response to the force applied to the sensor;
recording a duration that the force is applied; and
calculating an absolute force based at least in part on the duration and the peak force.

12. The method of claim 11, wherein the adjusting the gain setting for the sensor comprises setting a programmable gain amplifier (PGA) to the minimum gain setting for the PGA.

13. The method of claim 11 or claim 12, wherein the making force readings comprises taking high-frequency readings of a resistance of the sensor.

14. The method of any one of claims 11 to 13, wherein the determining whether the gain adjustment is needed is based on a repetition of (i) causing the force to be applied to the sensor and removed from the sensor; (ii) adjusting the gain setting for the sensor to the minimum gain setting; and (iii) making force readings as the force is applied and removed.

15. The method of any one of claims 11 to 14, wherein the determining whether the gain adjustment is needed depends on whether the force readings fall within an optimal range of an analog-to-digital converter (ADC) in communication with the sensor.
